Europäisches Patentamt

(19) European Patent Office

Office européen des brevets

(11) EP 0 930 554 A1

## (12) EUROPEAN PATENT APPLICATION
published in accordance with Art. 158(3) EPC

(43) Date of publication:
21.07.1999 Bulletin 1999/29

(21) Application number: 98929835.1

(22) Date of filing: 03.07.1998

(51) Int. Cl.$^6$: **G05B 19/416**

(86) International application number:
PCT/JP98/03018

(87) International publication number:
WO 99/01805 (14.01.1999 Gazette 1999/02)

(84) Designated Contracting States:
**DE**

(30) Priority: **03.07.1997 JP 19204597**

(71) Applicant: **FANUC LTD**
**Minamitsuru-gun, Yamanashi 401-0597 (JP)**

(72) Inventors:
- **NIHEI, Ryo**
  **Fujiyoshida-shi, Yamanashi 403-0005 (JP)**
- **SHIRAHATA, Toru,**
  **R.8-308,**
  **Fanuc Manshonharimomi**
  **Minamitsuru-gun, Yamanashi 401-0511 (JP)**

- **INOUE, Toshihiko,**
  **R.10-105,**
  **Fanuc Manshonharimomi**
  **Minamitsuru-gun, Yamanashi 401-0511 (JP)**
- **TAKIKAWA, Ryuji,**
  **R.5-307,**
  **Fanuc Manshonharimomi**
  **Minamitsuru-gun, Yamanshi 401-0511 (JP)**

(74) Representative:
**Billington, Lawrence Emlyn et al**
**Haseltine Lake & Co.,**
**Imperial House,**
**15-19 Kingsway**
**London WC2B 6UD (GB)**

## (54) METHOD OF CONVERSION OF ROBOT TEACHING PROGRAM

(57)    An original teaching program, written for the motion along a path having a linear section and a circular-arc section to smoothly link with each other through a teaching point P2, is optimized through conversion from the viewpoint of a need to avoid both the generation of vibrations and the increase of a cycle time. A teaching speed in the circular-arc section is changed to a largest allowable value v2' through correction on the condition that the relation among a plurality of circular-arc sections in terms of their connections to one another is taken into consideration. An additional teaching point Pad is set on the basis of a distance j2 required for determining a transition range required for bringing the decelerating motion in the linear section from the teaching speed v1 to v2' to completion at a point P2, and an motion command 3 (a teaching speed v2) for the linear motion is created. Subsequently, the acceleration in a decelerating motion is processed to become equal to the allowable acceleration a.

F I G. 4

EP 0 930 554 A1

## Description

## TECHNICAL FIELD

This invention relates to a method of converting a teaching program of an industrial robot (hereinafter referred to as "robot"), more particularly to a technique for optimizing a teaching program, which is written for the motion of a robot along a path including a circular-arc path, by converting the teaching program to avoid both the generation of vibrations and the increase of a cycle time.

## BACKGROUND ART

In reproductive operation of a robot which has been taught the motion along a path including the circular-arc motion, the robot is sometimes subject to vibration under the influence of centrifugal force depending on a taught speed (a command speed) of the circular-arc motion. Such vibrations are more apt to be generated the higher the teaching speed is, or the smaller the radius of a circular arc is. Accordingly, to avoid the generation of such vibrations, it is necessary to set the teaching speed to a proper value in consideration of the radius of the circular-arc.

However, in the individual cases, it is not easy for even a skilled operator to determine a teaching speed effective in avoiding both the unnecessary increase of a cycle time and the generation of vibrations, and so repetitive adjustment on the trial-and-error basis is frequently required until a proper value of teaching speed is found.

Besides, there is another factor causing the generation of vibrations in relation to acceleration or deceleration occurring in case of linking the motion along a linear path to the motion along a circular-arc path without positioning (through a smooth transition). That is, in making a smooth transition (without positioning) from a linear section, in which a relatively high-speed motion is frequently taught, to a circular-arc section, in which a lower-speed motion as compared with the linear section is frequently taught, an accelerating/decelerating range to be produced by transition stretches over both the linear and circular-arc sections, and the vibration is more apt to occur due to the interplay of the influence of force produced by the accelerating/decelerating motion and the influence of centrifugal force produced by the circular-arc motion.

In such a case, sometimes the vibrations cannot be prevented even by setting the teaching speed of the circular-arc motion in consideration of the radius of the circular arc. Depending on situation, it may be hardly possible to avoid the vibrations unless the teaching speed in the linear path is adjusted to a lower level. Thus, the work of setting the teaching speed to a proper level becomes more difficult.

As one of methods of preventing the decelerating motion from overlapping the circular-arc motion during the transition, there is a method of additionally setting a new teaching point in the course of a linear path preceding to the point from which a circular-arc path begins so as to create a range required for completion of the accelerating/decelerating motion by making use of the additional teaching point so that the accelerating/decelerating motion can be completed within this range.

However, when applying this method in practice, it is very difficult for the operator to determine the proper length (dependent on the position of the additional teaching point) of the above range (a linear section) being neither too much nor too less. That is, if the range is too large, the cycle time becomes longer, resulting in fall of working efficiency. On the other hand, if the range is too small, it is not possible to bring the decelerating motion to completion before the start of the motion along the circular-arc path.

## DISCLOSURE OF THE INVENTION

It is an object of the present invention to solve the problems in the prior art. That is, the object of the present invention is to automatically determine a proper teaching speed with respect to the specked motion along a circular-arc path in a teaching program of a robot, whereby the generation of vibrations accompanying the circular-arc motion is restrained without reducing the speed of the circular-arc motion unnecessarily.

The further object of the present invention is to prevent the generation of vibrations due to the coincidence of the accelerating/decelerating motion and the circular-arc motion without bringing about the unnecessary increase of a cycle time in relation to the positioning-tree transition from the specified linear motion to the specified circular-arc motion in a teaching program of a robot. In other words, the present invention is designed to reduce a load of teaching work through the matters described above.

For attaining the above objects, in one embodiment of the method according to the present invention, there is a process of converting a teaching program of the robot through software processing using a conversion processing device having software processing capability, wherein the teaching program includes an motion command for the motion along a circular-arc path, and the software processing includes processing to set the teaching speed for the motion along the circular-arc path to a predetermined value according to the radius of a circular arc.

In another embodiment of the method according to the present invention, there is a process of converting a teaching program of the robot through software processing using a conversion processing device having software processing capability, wherein the teaching program includes an motion command to smoothly link the motion along a linear path with the motion along a circular-arc path, and the software processing includes processing to set the teaching speed with respect to the motion along the circular-arc path to a predetermined maximum allowable speed value according to the radius of a circular arc, and processing to enable the accelerating/decelerating motion for the transition from the motion along the linear path to the motion along the circular-arc path to be completed according to a start point of the circular-arc motion.

According to the present invention, it is possible to restrain the generation of vibrations without reducing the speed of the motion of the robot along the circular-arc path unnecessarily. Particularly, in the positioning-free transition from the motion along the linear path to the motion along the circular-arc path, it is possible to prevent the generation of vibrations, which may occur when the decelerating motion in the motion along the linear path continues still after the transition to the motion along the circular-arc path, without bringing about the unnecessary increase of a cycle time. Further, the load of teaching work may be reduced through the above processes.

BRIEF DESCRIPTION OF THE DRAWING

Fig. 1 is a block diagram showing an essential part of a system including a robot control device available for the execution of a method according to the present invention;
Fig. 2A is a diagram showing an assumed path in an embodiment 1;
Fig. 2B is a diagram showing an assumed path in an embodiment 2;
Fig. 3 is a diagram showing the outline of the accelerating and decelerating motion in the transition from a linear path to a circular-arc section on the basis of an original teaching program;
Fig. 4 is a diagram showing the outline of the accelerating/decelerating motion in the transition from a linear path to a circular-arc section when the original teaching program shown in Fig. 3 is converted according to the embodiment 1;
Fig. 5 is a diagram showing the outline of the accelerating/decelerating motion in the transition from a linear path to a circular-arc section on the basis of an original teaching program;
Fig. 6 is a diagram showing the outline of the accelerating/decelerating motion in the transition from a linear path to a circular-arc section when the original teaching program shown in Fig. 5 is converted according to the embodiment 2;
Fig. 7 is a flow chart showing the outline of processing for conversion according to the embodiment 1;
Fig. 8 is a flow chart showing the outline of processing for conversion according to the embodiment 2;

Fig. 9 is a flow chart for explaining the procedure to be followed when processing for conversion to optimize an original teaching program is performed in concurrence with reproductive running; and
Fig. 10 is a flow chart for explaining the procedure to be followed when processing for conversion to optimize an original teaching program is performed prior to reproductive running.

BEST MODE FOR EMBODYING THE INVENTION

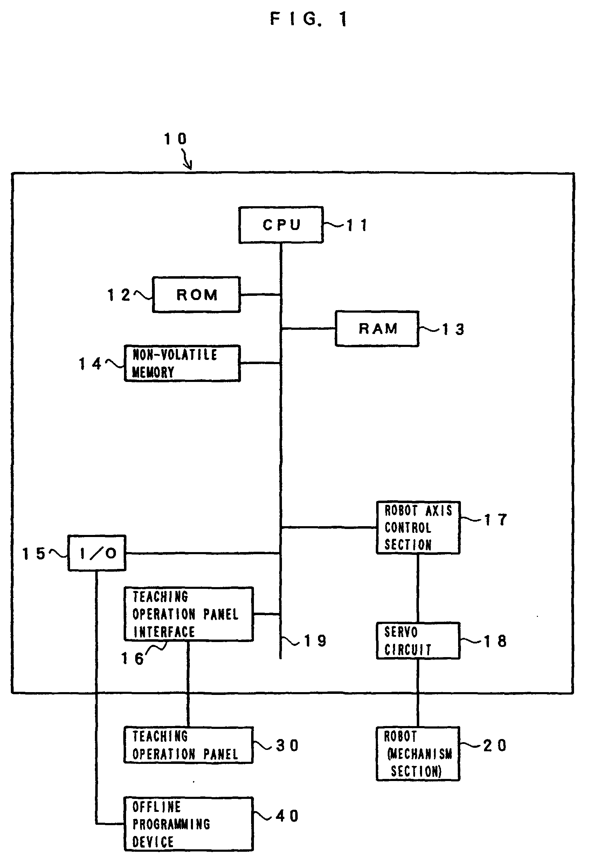

A description will be first given of an essential part of a system including a robot control device available for the execution of a method according to the present invention with reference to a block diagram shown in Fig. 1.
A robot control device 10 comprises a central processing unit (hereinafter referred to as CPU) 11. To the CPU 11 are connected a memory 12 including a ROM, a memory 13 including a RAM, a non-volatile memory 14, an input/output device 15 for an external device, an interface 16 for a teaching operation panel 30 and a robot axis control section 17 through a bus 19. The robot axis control section 17 controls the motion of each axis of a robot mechanism section 20 through a servo circuit 18.
As one of external devices, a known offline programming device 40 having a CPU and a memory or the like can be connected to the input/output device 15. A personal computer may sometimes be used for the offline programming device 40. The convertible original teaching program is provided in the memory of the offline programming device 40 or the non-volatile memory 14 in the robot control device 10. Processing for conversion by the software according to the present invention may be performed either by the robot control device 10 or by the offline programming device 40. Software (including various set values) required for the processing for conversion is previously loaded in memories (the non-volatile memory 14 of the robot control device 10 and the memory of the offline programming device 40) of the equipment for performing the processing for conversion.
Further, required data is transferred between the robot control device 10 and the offline programming device 40. For instance, data of the original teaching program may be provided in the memory of the offline programming device 40; the processing for conversion according to the present invention may be performed in the offline programming device 40, and data of the converted teaching program may be transferred from the offline programming device 40 to the robot control device 10 and may be then stored in the non-volatile memory 14.
The ROM 12 is stored with a program to control the whole system including the robot control device 10 itself. The RAM 13 is for the temporary storage of data required for the processing to be performed by the CPU 11. The non-volatile memory 14 is stored with various set values relating to the operation of each part of the system and data of the above-described original teaching program or the converted teaching program.

A description will now be given of an example of the processing for conversion (Embodiments 1 and 2) performed by either the robot control device 10 or the offline programming device 40.

(Embodiment 1: Smoothness rate of 100%)

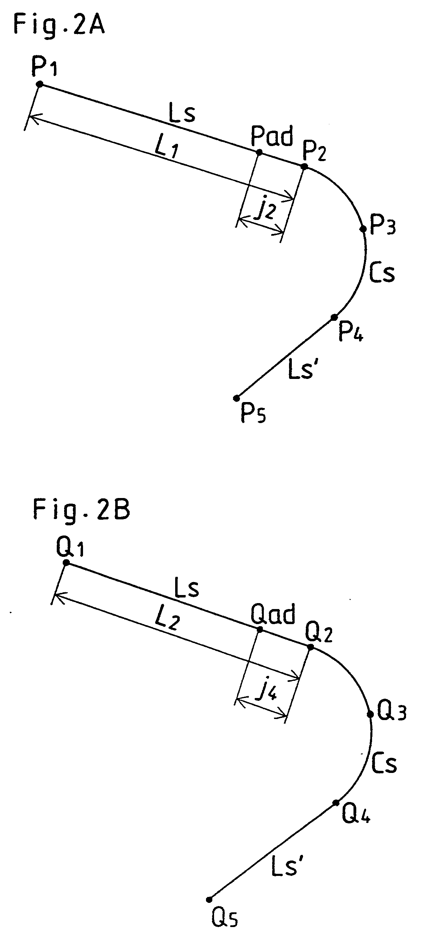

A path shown in Fig. 2A is a travel path specified in a teaching program (an original teaching program) which is not yet converted. That is, the travel path is composed of a linear path from a point P1 to a point P2, a circular-arc path from the point P2 to a point P4 and a linear path from the point P4 to a point P5. Incidentally, the linear path from the point P1 to the point P2 and the circular-arc path from the point P2 to the point P4 in the travel path shown in Fig. 2A are hereinafter respectively referred to as a linear section Ls and a circular-arc section Cs. Further, the length of the linear section Ls is assumed to be L1.

The original teaching program is prescribed so that the transition from the linear section Ls to the circular-arc section Cs is made "at a smoothness rate of 100% (at a positioning rate of 0%)". In this case, "the smoothness rate of 100%" means that during a period through which a decelerating range portion according to a certain motion command is maintained one-hundred percent, the accelerating motion according to the next motion command is started.

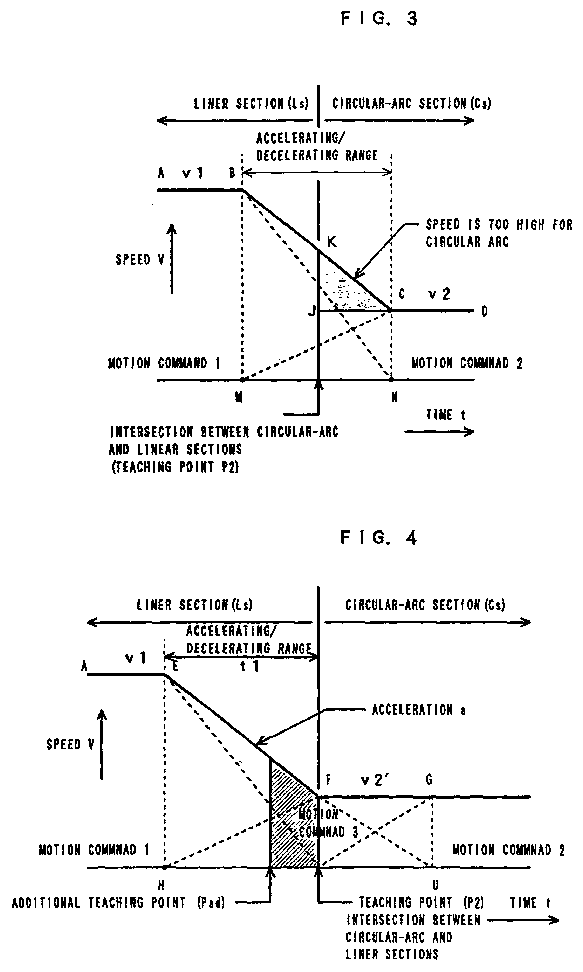

A description will now be given of the outline of the accelerating/decelerating motion in the transition from the linear section Ls to the circular-arc section Cs on the basis of the original teaching program with reference to Fig. 3.

Referring to Fig. 3, the axis of abscissa represents time, and the axis of ordinate represents speed. An motion command 1 relates to the motion along the linear section Ls, and its specified teaching speed in the original teaching program is represented by v1 (refer to a linear section AB). An motion command 2 relates to the motion along the circular-arc section Cs, and its specified teaching speed in the original teaching program is represented by v2 (refer to a linear section CD). In a normal case, a speed lower than that in the linear section Ls is taught as the speed in the circular-arc section Cs (v1> v2).

Since the embodiment 1 makes it a condition that the transition is made at the smoothness rate of 100%, the decelerating motion (refer to a broken-line section BN) according to the motion command 1 and the accelerating motion (refer to a broken-line section MC) according to the motion command 2 are simultaneously started and also simultaneously ended. A composition of the decelerating motion according to the motion command 1 and the accelerating motion according to the motion command 2 represents the transition of speed as shown by a solid line BC. As a result, a speed higher than the teaching speed v2 specified for the circular-arc section Cs is commanded for a little while even after the passage through a taught point P2 defining a point of junction between the linear section Ls and the circular-arc section Cs, as shown by a triangle defined by points J, C and K.

Accordingly, not only in a case where the specified teaching speed v2 in the circular-arc section Cs is too high, but also in a case where the speed v2 is a reasonable value as the travel speed itself in the circular-arc section Cs, still there is a possibility that the robot is forced to make an unsmooth motion, causing the vibrations correspondingly to the excessive speed range shown by the above-described triangle defined by the points J,C and K.

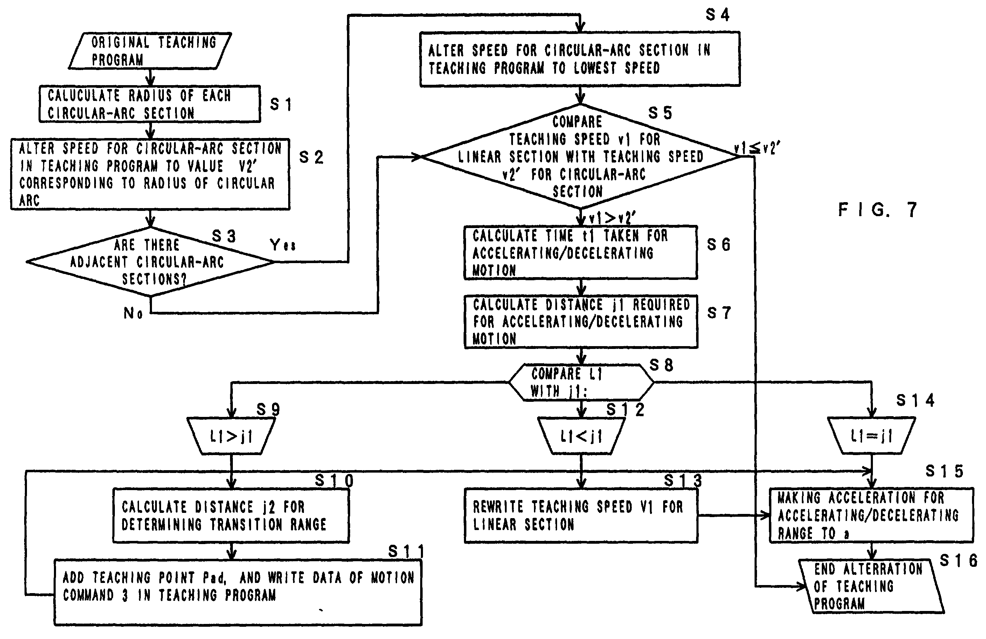

A description will now be given of the procedure of altering the original teaching program so as to prevent the speed in the transition from the linear section Ls to the circular-arc section Cs (that is, immediately after the passage through the point P2) from exceeding the specified teaching speed v2 in the circular-arc section Cs, with reference to the flow chart shown in Fig. 7. The alteration of the program is performed in the robot control device 10 or the offline programming device 40. The essentials of the processing performed in each step of the flow chart shown in Fig. 7 are as follows.

(Step S1) The original teaching program is input to search a circular-arc path, and the radius of a circular arc is calculated with respect to each circular-arc path. A value of the radius of the circular-arc path may be calculated on the basis of position data of teaching points (three points) defining the circular-arc path. For instance, with respect to the circular-arc section Cs shown in Fig. 2A, the radius of the circular arc can be found on the basis of the points P2, P4 and P3 respectively representing the start point, the end point and the intermediate point of the circular-arc section Cs.

Incidentally, in this processing, a case where the original teaching program includes no circular-arc path is not assumed.

(Step S2) A teaching speed value corresponding to the radius of the circular arc calculated in Step S1 is found with reference to a speed table, and the teaching speed in the circular-arc path specified by the teaching program is altered to the teaching speed value found with reference to the speed table. In the speed table, the maximum allowable value of the operable teaching speed is set for each range of the radius of the circular-arc path from the viewpoint of prevention of generation of vibrations, and its specific value may be determined by experiment or the like as the maximum allowable value effective in preventing the generation of vibrations.

(Step S3) It is checked whether or not two or more adjacent circular-arc paths are present. If YES, the processing proceeds to Step S4; if NO (for instance, a case shown in Fig. 2A), the processing proceeds to Step S5.

(Step S4) A teaching speed value with respect to the radius of each circular arc of a plurality of adjacent circular-arc paths is found with reference to the speed table and is rewritten such that the minimum value among the found teaching speed values is applied to a teaching speed value for each of the plurality of circular-arc paths.

(Step S5) The teaching speed value (hereinafter referred to as v2') for the circular-arc path rewritten in Step S2 or S4 is compared with the teaching speed (hereinafter referred to as v1) specified for the linear path immediately preceding the circular-arc path.

Here, if $v1 \leqq v2'$, this means that a section equivalent to the triangle defined by the points J, C and K shown in Fig. 3 will not occur in the accelerating/decelerating motion in the transition from the linear path (the linear section Ls) to the circular-arc path (the circular-arc section Cs), and, therefore, the processing proceeds to Step S16 to bring the processing to an end.

On the other hand, if $v1 > v2'$, this means that a section equivalent to the triangle defined by the points J, C and K shown in Fig. 3 will occur in the accelerating/decelerating motion in the transition from the linear path to the circular-arc path. In this case, the processing proceeds to Step S6.

(Step S6) A time ti required for the accelerating/decelerating motion is determined for a section where the linear path, for which the teaching speed v1 is specified, is adjacent to the circular-arc path, for which the teaching speed v2' is specified. This time t1 is calculated according to the following expression (1) assuming that an allowable acceleration value (an absolute value) is represented by a.

$$t1 = (v1 - v2')/a \qquad (1)$$

The allowable acceleration value a is predetermined as the maximum allowable value which will not cause the robot to generate vibrations or the like.

(Step S7) A travel distance j1 required for the accelerating/decelerating motion is calculated with respect to a section where the linear path, in which the teaching speed v1 is specified, is adjacent to the circular-arc path, in which the teaching speed v2' is specified. The travel distance j1 is found by the following expression (2).

$$j1 = (v1 + v2') \times t1/2 \qquad (2)$$

Substitution of the expression (1) into the

expression (2) gives:

$$j1 = (v1^2 - v2'^2)/(2 \times a) \qquad (3)$$

(Step S8) It is checked whether or not the linear path, in which the teaching speed v1 is specified, is long enough to secure the above distance j1. That is, it is judged whether or not L1>j1 assuming that the distance of the linear path (the linear section Ls) is L1 (See Fig. 2A).

(Step S9) If it is determined that L1>j1 in Step S8, a section corresponding to the distance j1 (hereinafter referred to as "an accelerating/decelerating distance") can be provided within the linear path having the distance L1. In this case, the processing proceeds to Step S10. Incidentally, the extent of the distance j1 is equivalent to an area of a quadrangle defined by the points E, H, P2 and F in Fig. 4.

(Step S10) A distance j2 required for determining "a transition range", which will be described later, is calculated. The distance j2 is calculated on condition that the start point (an accelerating start point of the circular-arc motion) of the motion command 2 relating to the circular-arc section Cs is made to agree with the teaching point P2 and that the end point of the accelerating/decelerating motion accompanying the transition from the linear section Ls to the circular-arc section Cs is similarly made to agree with the teaching point P2. The distance J2 is equal to a distance (equivalent to an area of a triangle defined by points G, P2 and U shown in Fig. 4) required for the accelerating range in the circular-arc motion and can be found according to the following expression (4).

$$j2 = v2' \times t1/2 \qquad (4)$$

Substitution of the expression (1) into the expression (4) gives:

$$j2 = (v1 \times v2' - v2'^2)/(2 \times a) \qquad (4')$$

(Step S11) In the linear section Ls, an additional teaching point Pad is set at a point traced back from the teaching point P2, representing the start point of the motion command 2 for the circular-arc section Cs, by the distance j2 found by the above expression (4), and position data of the additional teaching point Pad is added to the teaching program. Further, data of an motion command 3 for the linear motion from the point Pad to the point P2 is added to the teaching program. The teaching speed according to the motion command 3 is made equal to the teaching speed v2' in the circular-arc section Cs.

A range (the distance j2) on the linear section Ls from the teaching point P2 to the additional teaching point Pad is referred to as the transition range. According to the present invention, the transition range is provided in the linear section Ls, and, as a result, the accelerating/decelerating motion is brought to completion at a point of intersection between the linear section Ls and the circular-arc section Cs to thereby avoid the accelerating/decelerating motion in the circular-arc section Cs.

The processing proceeds to Step S15 subsequent to completion of the processing in Step S11.

(Step S12) If it is determined that L1<j1 in the above Step S8, this means that the linear section Ls is not enough to secure the accelerating/decelerating distance j1. In this case, the processing proceeds to Step S13.

(Step S13) When L1<j1, the teaching speed in the motion command 1 relating to the linear section Ls is altered from v1 to v1' such that the accelerating/decelerating distance j1 becomes equal to the distance L1 of the linear section Ls. In this case, substitution of j1 = L1 and v1 = v1' into the above expression (3) gives:

$$L1 = (v1'^2 - v2'^2)/(2 \times a) \qquad (5)$$

And, a new teaching speed v1' is found according to the following expression (6) based on the above expression (5).

$$v1' = (2 \times a \times L1 + v2'^2)^{1/2} \qquad (6)$$

The processing proceeds to Step S15 subsequent to completion of the processing in Step S13.

(Step S14) If it is determined that L1 = j1 in the above Step S8, this means that the whole linear section Ls is equal to the accelerating/decelerating distance j1. In this case, there is no need of setting the additional teaching point, and the processing proceeds from Step S11 to Step S15 through this step.

(Step S15) The processing is made so that the acceleration of the decelerating motion from the linear path, in which the teaching speed v1 (or v1') is specified, to the circular-arc path, in which the teaching speed v2' is specified, becomes equal to the above allowable acceleration. That is, the decelerating distance j1 is calculated on the basis of the finally-determined teaching speed v1 (or v1') by the motion command 1 by using the expression (3) or (5), and a point H is found so that the area of the quadrangle defined by the points E, F, P2 and H becomes equivalent to the decelerating distance j1, assuming that the gradient (the absolute value) of the accelerating/decelerating range EF is a in Fig. 4. Then, the motion command 1 is designed so that the decelerating motion is started at the point H and is brought to completion at the point P2. That is, a time constant is equivalent to the distance between the points H and P2.

(Step S16) With the foregoing steps, the processing for conversion of the original teaching program comes to an end. Incidentally, with respect to the transition from the circular-arc section Cs to the other linear section Ls', when necessary, it is also possible, according to the similar procedure, to prevent the acceleration to a higher speed within the circular-arc path by setting "a transition range" for the acceleration for the transition to the linear path, in which higher teaching speed is specified.

(Embodiment 2: Smoothness rate of 50%)

A path shown in Fig. 2B is adapted for a travel path specified in a teaching program (an original teaching program) which has not yet been converted. That is, the travel path is composed of a linear path from a point Q1 to a point Q2, a circular-arc path from the point Q2 to a point Q4 and a linear path from the point Q4 to a point Q5. Incidentally, the linear path from the point Q1 to the point Q2 and the circular-arc path from the point Q2 to the point Q4 in the travel path shown in Fig. 2B are hereinafter respectively referred to as a linear-section Ls and a circular-arc section Cs. Further, the length of the linear section Ls is assumed to be L2.

The original teaching program is deigned so the transition from the linear section Ls to the circular-arc section Cs is made at "the smoothness rate of 50%" (at the positioning rate of 50%). In this case, "the smoothness rate of 50%" means that, in the state where a decelerating range portion according to a certain motion command is fifty-percent left over, the accelerating motion according to the next motion command is started.

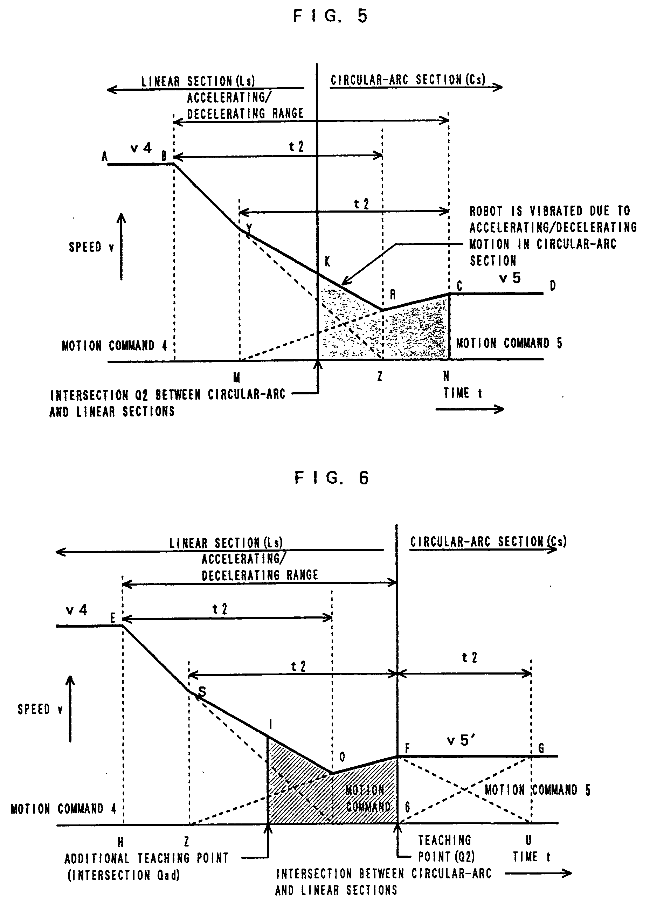

The accelerating/decelerating motion for the transition from the linear section Ls to the circular-arc section Cs on the basis of the original teaching program will be outlined here with reference to Fig. 5.

Referring to Fig. 5, the axis of abscissa represents time while the axis of ordinate represents speed. An motion command 4 relates to the motion along the linear section Ls, and the teaching speed specified in the original teaching program is represented by v4 (refer to a linear section AB). Further, an motion command 5 relates to the motion along the circular-arc section Cs, and the teaching speed specified in the original teaching program is represented by v5 (refer to a linear section CD). In a normal case, a speed lower than that in the linear section Ls is taught as a teaching speed in the circular-arc section Cs (v4>v5).

Since the embodiment 2 makes it a condition that the transition is made at the smoothness rate of 50%, the decelerating motion (refer to a broken-line section BZ) according to the motion command 4 is started prior to the accelerating motion (refer to a broken-line section MC) according to the motion command 5. The transition of the speed is formed by composing the decelerating motion according to the motion command 4 and the accelerating motion according to the motion command 5, as shown by a solid line passing through points B, Y, K, R and C. As a result, an accelerating/decelerating range defined by points K, Q2, N, C, R and K is formed within the circular-arc section Cs.

Accordingly, not only in a case where the specified teaching speed v5 in the circular-arc section Cs is too high, but also even in a case where the speed v5 is a reasonable value as the travel speed itself in the circular-arc section Cs, an unnatural motion of the robot can occur to generate vibrations correspondingly to the accelerating/decelerating range defined by the points K, Q2, N, C, R and K.

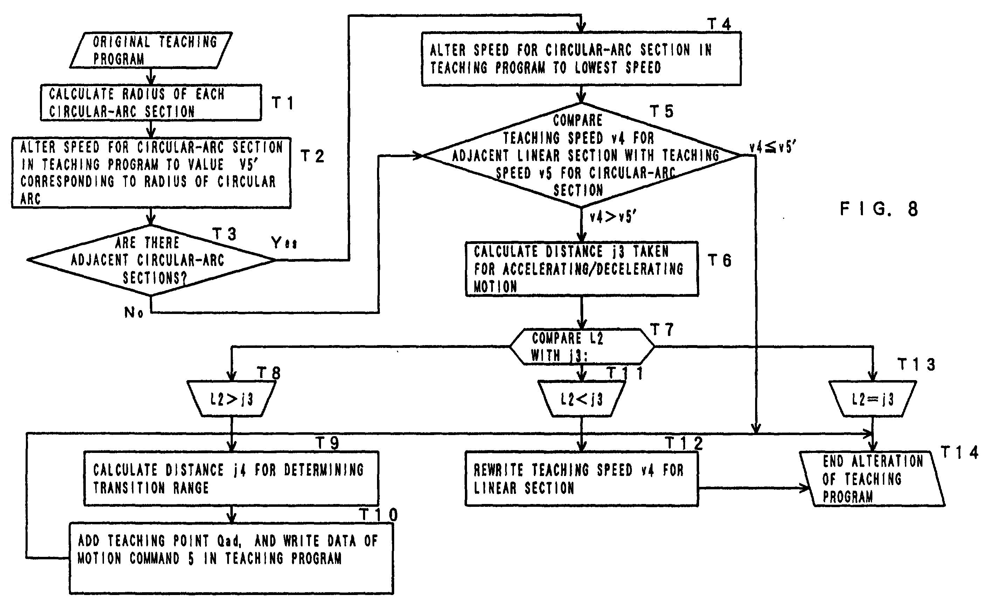

For this reason, according to the embodiment 2, the processing for conversion outlined in the flow chart in Fig. 8 is performed in the robot control device 10 or the offline programming device 40 to alter the original teaching program into a teaching program designed to be capable of restraining the generation of vibrations. The essentials of the processing performed in each step of the flow chart in Fig. 8 are as follows.

(Step T1) The original teaching program is read to search a circular-arc path, and the radius of a circular arc is calculated with respect to each circular-arc path. A value of the radius of the circular-arc path can be calculated on the basis of position data for teaching points (three points) defining the circular-arc path. For instance, with respect to the circular-arc section Cs shown in Fig. 2B, the radius of the circular arc can be determined by the points Q2, Q4 and Q3 respectively representing the start point, the end point and the intermediate point of the circular-arc section Cs. Incidentally, in this processing, a case where the original teaching program includes no circular-arc path is not assumed.

(Step T2) A teaching speed value corresponding to the radius of the circular arc calculated in Step T1 is found with reference to a speed table, and the teaching speed specified for in the circular-arc path according to the original teaching program is altered to the teaching speed value found with reference to the speed table. In the speed table, the maximum allowable value of the operable teaching speed is determined for each range of the radius of the circular-arc path from the viewpoint of prevention of the generation of vibrations, and its specific value may be determined by experiment or the like as the maximum allowable value effective for avoiding the generation of vibrations.

(Step T3) It is checked whether or not two or more adjacent circular-arc paths are present. If YES, the processing proceeds to Step T4; if NO (for instance, in a case as shown in Fig. 2B), the processing proceeds to Step T5.

(Step T4) A teaching speed value with respect to the radius of each circular arc of a plurality of adjacent circular-arc paths is found with reference to the speed table and is rewritten such that the smallest value among the found teaching speed values is applied to rewrite a teaching speed value for each of the plurality of circular-arc paths.

(Step T5) The teaching speed value (hereinafter referred to as v5') for the circular-arc path rewritten in Step T2 or T4 is compared with the teaching speed (hereinafter referred to as v4) specified for the linear path immediately preceding the circular-arc path.

As the result of comparison, if v4≦v5', the accelerating/decelerating motion will not be made in the circular-arc path (v4 = v5') or there is no danger of giving the vibrations to the robot even if the accelerating/decelerating motion is made, so that the processing proceeds to Step T14 to bring the processing to an end. On the other hand, if v4>v5', the processing proceeds to Step T6.

(Step T6) A travel distance j3 required for the accelerating/decelerating motion is calculated with respect to a section, where the linear path, in which the teaching speed v4 is specified, is adjacent to the circular-arc path, in which the teaching speed v5' is specified. The travel distance j3 is calculated according to the following expression (7).

$$j3 = (v4 + v5') \times t2/2 \qquad (7)$$

Where, t2 represents a time required for the accelerating/decelerating motion according to the motion commands 4 and 5, and is a time constant calculated on the bases of the teaching speed and other conditions.

(Step T7) It is checked whether or not travel distance j3 can be secured on the linear path, in which the teaching speed v4 is specified. That is, whether or not L2>j3 is determined, assuming that the distance of the linear path (the linear section Ls) to be L2 (refer to Fig. 2B). Further, the travel distance j3 is equivalent to an area defined by the points E, H, Q2, F, O, I, S, E and H in Fig. 6.

(Step T8) If it is determined that L2>j3 in Step T7, a section covering the distance j3 (hereinafter referred to as "an accelerating/decelerating distance") can be provided within the linear path having the distance L2. In this case, the processing proceeds to Step T9.

(Step T9) A distance j4 required for determining "a transition range" is calculated. The distance j4 is calculated on condition that the start point of the motion command 5 relating to the circular-arc section Cs is made to agree with the teaching point Q2, and that the end point of the accelerating/decelerating motion accompanying the transition from the linear section Ls to the circular-arc section Cs is similarly made to agree with the teaching point Q2. The distance j4 is equal to a distance (equivalent to an area of a triangle defined by points Z, Q2 and F in Fig. 6) required for the accelerating range of the circular-arc motion and can be found according to the following expression (8).

$$j4 = v5' \times t2/2 \qquad (8)$$

(Step T10) In the linear section Ls, an additional teaching point Pad is set at a point traced back from the teaching point Q2, which is the start point of the motion command 5 for the circular-arc section Cs, by the distance j4 found by the above expression (8), and position data of the additional teaching point Qad is added to the teaching program. Further, data of an motion command 6 relating to the linear motion from the point Qad to the point Q2 is added to the teaching program. Then, the smoothness rate at the teaching point Q2 in the motion command 6, is changed to 100%, while the smoothness rate at the teaching point Qad in the motion command 5, is held at 50%.

An area of the range defined by the points I, Qad, Q2, F, O and I covered by slant lines in Fig. 6 is equivalent to the distance j4.

(Step T11) If L2<j3 when determined in the above Step T7, this means that the linear section Ls is not sufficient to secure the accelerating/decelerating distance j3. In this case, the processing proceeds to the next Step T12.

(Step T12) When L2<j3, the teaching speed by the motion command 4 relating to the linear section LS is altered from v4 to v4' such that the accelerating/decelerating distance j3 becomes equal to the distance L2 of the linear section Ls. Substitution of j3 = L2 and v4 = v4' into the above expression (7) gives:

$$L2 = (v4' + v5') \times t2/2 \qquad (9),$$

and a new teaching speed v4' is found according to the following expression (10) based on the above expression (9).

$$v4'= 2 \times L2/t2 - v5' \qquad (10)$$

The processing proceeds to Step T14 subsequent to completion of the processing in Step T12 to bring the processing for conversion to an end.

(Step T13) If j3 = L2 when determined in the above Step T7, this means that the whole linear section Ls is equal to the accelerating/decelerating distance j3. In this case, there is no need of setting the additional teaching point, and the processing proceeds to Step S14 to bring the processing for conversion to an end.

(Step T14) The processing for conversion of the original teaching program is completed by going through the foregoing steps. For the transition from the circular-arc section Cs to the linear section Ls', it may be also possible to prevent acceleration at a high speed in the circular-arc path by setting "a transition range" for the acceleration for the transition to the linear path where a higher teaching speed is specified, according to the similar procedure to that of the embodiment 1 at need.

The description has been given of the embodiments in case of the smoothness rate of 100% and that of 50%, the present invention may also be generally applied to a case where different smoothness rate is specified, and in this case, it is possible to bring accelerating/decelerating motion to completion at the start point of a circular-arc section through processing for conversion similar to that shown in the flow chart of Fig 8.

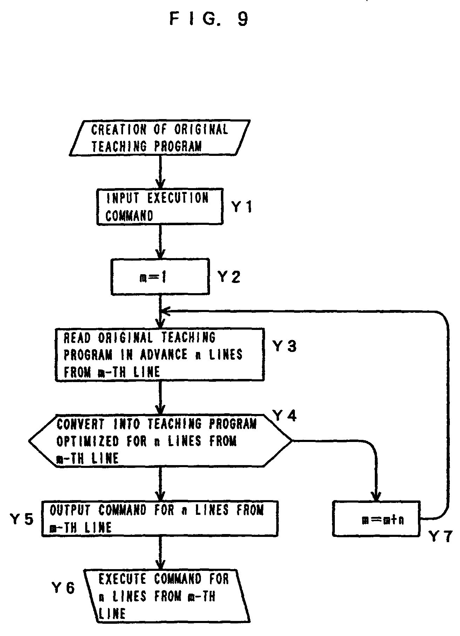

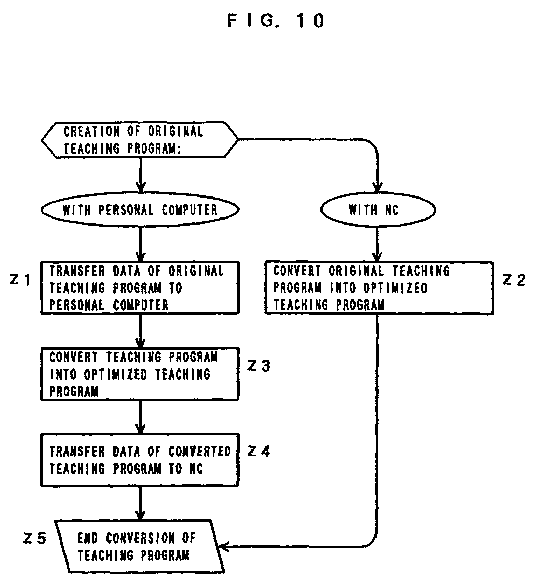

Lastly, a description will be given of the timing to perform the processing for conversion described above. The processing for conversion to optimize the original teaching program may be performed either in concurrence with reproductive running (1) or prior to reproductive running (2). The outline of the procedure in the former case is shown in a flow chart of Fig. 9, and the outline of the procedure in the latter case is shown in a flow chart of Fig. 10. Step Y4 in the flow chart of Fig. 9 and Steps Z2 and Z3 in the flow chart of Fig. 10 are equivalent to the processing for conversion described above. The essentials of each step in both the flow charts are as follows.

(Flow chart in Fig. 9)

(Step Y1) Input of a command for executing the original teaching program is performed.
(Step Y2) A line pointer m is set to 1 (m = 1).
(Step Y3) The original teaching program is read in advance by n lines from the m-th line. However, when the last line is reached before reading of n lines in the original teaching program is completed, the original teaching program is read in advance to the last line.
(Step Y4) The original teaching program is converted so as to optimize the lines read advance in Step Y3.
(Step Y5) An motion command for the converted teaching program portion (a portion of n lines from the m-th line) is outputted.
(Step Y6) The motion for the converted teaching program portion (a portion of n lines from the m-th line) is performed. Thereby, the robot is operated on the basis of the teaching program which has been converted for n lines from the m-th line.
(Step Y7) The line pointer m is shifted up to m = m + n for converting the next n lines in concurrence with the flow in Steps Y5 and Y6.

The above processing cycle is executed with respect to all the lines of the original teaching program, and, as a result, the processing for conversion of the original teaching program can be performed in concurrence with reproductive running.

(Flow chart in Fig. 10)

(Step Z1) When necessary, the original teaching program is transferred to the equipment that executes the processing for conversion. For instance, when the processing for conversion of the original teaching program is performed by a personal computer, the original teaching program created by the robot control device or the offline programming device is transferred to the personal computer. The original teaching program may be created also by the personal computer on condition that the personal computer is used as the offline programming device. In this case, there is no need of transfer.

(Step Z2) When the original teaching program is provided in the robot control device (NC control device), it is possible to perform the processing for conversion of the teaching program by the robot control device (NC control device).

(Step Z3) The processing for conversion of the original teaching program is performed by the personal computer.

(Step Z4) Data of the converted teaching program is transferred to the robot control device (NC control device).

(Step Z5) Executing the above procedures, the processing for conversion of the original teaching program is performed prior to reproductive operation.

## Claims

1. A method of converting a teaching program of a robot through software processing by using a conversion processing device having software processing capability, wherein

   said teaching program includes an motion command for the motion along a circular-arc path; and
   said software processing includes processing to set a teaching speed for the motion along said circular-arc path to a predetermined value according to the radius of a circular arc.

2. A method of converting a teaching program of a robot according to claim 1, wherein said software processing includes processing for setting a common teaching speed in the case where said original teaching program includes an motion command for the motion for smoothly linking two or more continuous circular-arc paths with each other, the common teaching speed being the lowest one among those predetermined with respect to the circular-arc paths, instead of setting predetermined speed value for each of said circular-arc paths.

3. A method of converting a teaching program of a robot through software processing by using a conversion processing device having software processing capability, wherein

   said teaching program includes an motion command for smoothly linking the motion along a linear path with the motion along a circular-arc path;
   said software processing including processing for setting teaching speed for the motion along said circular-arc path to a predetermined speed according to the radius of a circular arc, and processing for completing the accelerating/decelerating motion for the transition from the motion along the linear path to the motion along the circular-arc path according to the start point of the motion along the circular-arc path.

4. A method of converting a teaching program of a robot according to claim 3, wherein said software processing includes processing for setting a common teaching speed when said original teaching program includes an motion command for the motion for smoothly linking two or more continuous circular-arc paths with each other, the common teaching speed being the lowest one among those set for the circular-arc paths, instead of setting the predetermined speed value for each of said circular-arc paths.

5. A method of converting a teaching program of a robot according to claim 3 or 4, wherein the processing for completing the accelerating/decelerating motion for the transition from the motion along said linear path to the motion along said circular-arc path according to the start point of the motion along the circular-arc path includes processing for additionally setting an additional teaching point within said linear path.

F I G. 1

Fig.2A

Fig.2B

# FIG. 3

LINER SECTION (Ls) | CIRCULAR-ARC SECTION (Cs)

ACCELERATING/
DECELERATING RANGE

A  v1  B

SPEED V

SPEED IS TOO HIGH FOR
CIRCULAR ARC

K

C  v2  D

J

MOTION COMMAND 1

MOTION COMMNAD 2

M

N

TIME t

INTERSECTION BETWEEN CIRCULAR-ARC
AND LINEAR SECTIONS
(TEACHING POINT P2)

# FIG. 4

LINER SECTION (Ls)

CIRCULAR-ARC SECTION (Cs)

ACCELERATING/
DECELERATING RANGE
t1

A  v1  E

ACCELERATION a

SPEED V

F  v2'  G

MOTION
COMMNAD 3

MOTION COMMNAD 1

MOTION COMMNAD 2

H

U

ADDITIONAL TEACHING POINT (Pad)

TEACHING POINT (P2)     TIME t
INTERSECTION BETWEEN
CIRCULAR-ARC AND
LINER SECTIONS

F I G. 5

LINEAR SECTION (Ls)
ACCELERATING/
DECELERATING RANGE

CIRCULAR-ARC SECTION (Cs)

t 2

t 2

SPEED v

ROBOT IS VIBRATED DUE TO
ACCELERATING/DECELERATING
MOTION IN CIRCULAR-ARC
SECTION

A  v 4  B

Y

K

R

C  v 5  D

MOTION COMMAND 4

MOTION COMMAND 5

M

Z

N

INTERSECTION Q2 BETWEEN CIRCULAR-ARC
AND LINEAR SECTIONS

TIME t

F I G. 6

LINEAR SECTION (Ls)
ACCELERATING/
DECELERATING RANGE

CIRCULAR-ARC SECTION (Cs)

v 4  E

t 2

t 2

t 2

SPEED v

S

I

O

F  v 5'  G

MOTION COMMAND 4

MOTION
COMMAND
6

MOTION COMMAND 5

H

Z

TEACHING
POINT (Q2)

U

ADDITIONAL TEACHING POINT
(INTERSECTION Qad)

INTERSECTION BETWEEN CIRCULAR-ARC
AND LINEAR SECTIONS

TIME t

F I G. 7

S1 — ORIGINAL TEACHING PROGRAM

S1 — CALCULATE RADIUS OF EACH CIRCULAR-ARC SECTION

S2 — ALTER SPEED FOR CIRCULAR-ARC SECTION IN TEACHING PROGRAM TO VALUE v2' CORRESPONDING TO RADIUS OF CIRCULAR ARC

S3 — ARE THERE ADJACENT CIRCULAR-ARC SECTIONS?  Yes / No

S4 — ALTER SPEED FOR CIRCULAR-ARC SECTION IN TEACHING PROGRAM TO LOWEST SPEED

S5 — COMPARE TEACHING SPEED v1 FOR LINEAR SECTION WITH TEACHING SPEED v2' FOR CIRCULAR-ARC SECTION   v1≦v2' / v1>v2'

S6 — CALCULATE TIME t1 TAKEN FOR ACCELERATING/DECELERATING MOTION

S7 — CALCULATE DISTANCE j1 REQUIRED FOR ACCELERATING/DECELERATING MOTION

S8 — COMPARE L1 WITH j1:

S9 — L1>j1

S10 — CALCULATE DISTANCE j2 FOR DETERMINING TRANSITION RANGE

S11 — ADD TEACHING POINT Pad, AND WRITE DATA OF MOTION COMMAND 3 IN TEACHING PROGRAM

S12 — L1<j1

S13 — REWRITE TEACHING SPEED V1 FOR LINEAR SECTION

S14 — L1=j1

S15 — MAKING ACCELERATION FOR ACCELERATING/DECELERATING RANGE TO a

S16 — END ALTERRATION OF TEACHING PROGRAM

14

FIG. 8

ORIGINAL TEACHING PROGRAM

CALCULATE RADIUS OF EACH CIRCULAR-ARC SECTION — T1

ALTER SPEED FOR CIRCULAR-ARC SECTION IN TEACHING PROGRAM TO VALUE V5' CORRESPONDING TO RADIUS OF CIRCULAR ARC — T2

ARE THERE ADJACENT CIRCULAR-ARC SECTIONS? — T3 — Yes / No

ALTER SPEED FOR CIRCULAR-ARC SECTION IN TEACHING PROGRAM TO LOWEST SPEED — T4

COMPARE TEACHING SPEED v4 FOR ADJACENT LINEAR SECTION WITH TEACHING SPEED v5 FOR CIRCULAR-ARC SECTION — T5 — v4≦v5' / v4>v5'

CALCULATE DISTANCE j3 TAKEN FOR ACCELERATING/DECELERATING MOTION — T6

COMPARE L2 WITH j3: — T7

L2>j3 — T8

L2<j3 — T11

L2=j3 — T13

CALCULATE DISTANCE j4 FOR DETERMINING TRANSITION RANGE — T9

REWRITE TEACHING SPEED v4 FOR LINEAR SECTION — T12

END ALTERATION OF TEACHING PROGRAM — T14

ADD TEACHING POINT Qad, AND WRITE DATA OF MOTION COMMAND 5 IN TEACHING PROGRAM — T10

EP 0 930 554 A1

## F I G. 9

```
┌────────────────────────┐
│ CREATION OF ORIGINAL   /
│ TEACHING PROGRAM      /
└──────────────────────┘
           │
           ▼
   ┌──────────────────┐
   │ INPUT EXECUTION  │  Y 1
   │ COMMAND          │
   └──────────────────┘
           │
           ▼
     ┌────────────┐
     │   m=1      │   Y 2
     └────────────┘
           │
           ▼
  ┌──────────────────────────┐
  │ READ ORIGINAL TEACHING   │  Y 3
  │ PROGRAM IN ADVANCE n LINES│
  │ FROM m-TH LINE           │
  └──────────────────────────┘
           │
           ▼
  ◁──────────────────────────▷  Y 4
  │ CONVERT INTO TEACHING PROGRAM │
  │ OPTIMIZED FOR n LINES FROM    │
  │ m-TH LINE                     │
  ◁──────────────────────────▷
           │                         │
           ▼                         ▼
  ┌──────────────────────────┐   ┌──────────┐
Y 5 │ OUTPUT COMMAND FOR n LINES FROM │  │  m=m+n   │
  │ m-TH LINE                │   └──────────┘  Y 7
  └──────────────────────────┘
           │
           ▼
  ┌──────────────────────┐
Y 6 │ EXECUTE COMMAND FOR  │
  │ n LINES FROM m-TH    │
  │ LINE                 │
  └──────────────────────┘
```

FIG. 10

CREATION OF ORIGINAL
TEACHING PROGRAM:

WITH PERSONAL COMPUTER

WITH NC

Z1 TRANSFER DATA OF ORIGINAL
TEACHING PROGRAM TO
PERSONAL COMPUTER

Z2 CONVERT ORIGINAL TEACHING
PROGRAM INTO OPTIMIZED
TEACHING PROGRAM

Z3 CONVERT TEACHING PROGRAM
INTO OPTIMIZED TEACHING
PROGRAM

Z4 TRANSFER DATA OF CONVERTED
TEACHING PROGRAM TO NC

Z5 END CONVERSION OF
TEACHING PROGRAM

| INTERNATIONAL SEARCH REPORT | International application No. |
|---|---|
| | PCT/JP98/03018 |

**A. CLASSIFICATION OF SUBJECT MATTER**
    Int.Cl⁶ G05B19/416

According to International Patent Classification (IPC) or to both national classification and IPC

**B. FIELDS SEARCHED**

Minimum documentation searched (classification system followed by classification symbols)
    Int.Cl⁶ G05B19/416

Documentation searched other than minimum documentation to the extent that such documents are included in the fields searched
    Jitsuyo Shinan Koho          1926-1995
    Kokai Jitsuyo Shinan Koho    1971-1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 7-210225, A (Okuma Corp.), August 11, 1995 (11. 08. 95) (Family: none) | 1 |
| Y | JP, 2-219107, A (Mitsubishi Electric Corp.), August 31, 1990 (31. 08. 90) & EP, B1, 396239 | 1 |
| Y | JP, 2-195409, A (Fanuc Ltd.), August 2, 1990 (02. 08. 90) (Family: none) | 2-4 |
| Y | JP, 4-88510, A (Mitsubishi Electric Corp.), March 23, 1992 (23. 03. 92) (Family: none) | 2-4 |
| A | JP, 9-44225, A (Fanuc Ltd.), February 14, 1997 (14. 02. 97) (Family: none) | 1-5 |
| A | JP, 8-339222, A (Matsushita Electric Industrial Co., Ltd.), December 24, 1996 (24. 12. 96) (Family: none) | 1-5 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| July 16, 1998 (16. 07. 98) | July 28, 1998 (28. 07. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)